# EUROPEAN PATENT SPECIFICATION

(11) **EP 3 291 970 B1**
(45) Date of publication and mention of the grant of the patent: **18.12.2019**
(21) Application number: 16727870.4
(22) Date of filing: 06.05.2016
(51) Int. Cl.: B29C 64/112, B33Y 70/00, B33Y 10/00, B29K 69/00

(54) **SYSTEM AND METHOD FOR REACTIVE INKJET PRINTING OF POLYCARBONATE**
SYSTEM UND VERFAHREN ZUM REAKTIVEN TINTENSTRAHLDRUCKEN VON POLYCARBONAT
SYSTÈME ET PROCÉDÉ POUR IMPRESSION À JET D'ENCRE RÉACTIVE DE POLYCARBONATE

(30) Priority: 06.05.2015 US 201562157682 P
(43) Date of publication of application: 14.03.2018
(73) Proprietor: SABIC Global Technologies B.V., 4612 PX Bergen op Zoom (NL)
(72) Inventor: HOCKER, Thomas, Pittsfield, Massachusetts 01201 (US); GU, Hao, 4612 PX Bergen op Zoom (NL); KAMPS, Jan Henk, 4612 PX Bergen op Zoom (NL); NOORDEGRAAF, Dirk, 4612 PX Bergen op Zoom (NL)
(74) Representative: Balder IP Law, S.L.
(86) International application number: PCT/US2016/031206
(87) International publication number: WO 2016/179491

(56) References cited:
- WO-A1-2013/091003
- WO-A1-2015/014381
- US-A1- 2006 159 869

## Description

### BACKGROUND

Fabrication of parts using three-dimensional (3D) computer-assisted design (CAD) data, also referred to as 3D printing or additive manufacturing, has been improving and becoming more prevalent. 3D printing technologies can include several different technology methods.

### SUMMARY

The present disclosure describes a system and method for three-dimensional (3D) printing of reactive polycarbonate precursor compounds onto a substrate to provide for rapid prototyping of one or more polycarbonate layers.

The present inventors have recognized, among other things, that a problem to be solved includes that present additive manufacturing methods of preparing polycarbonate materials, such as extrusion printing (also referred to as fused deposition modeling) or selective laser sintering, cannot provide for transparent polycarbonate structures. The present subject matter described herein can provide a solution to this problem, such as by providing for 3D inkjet printing of one or more polycarbonate precursor solutions to provide for transparent or substantially transparent polycarbonate structures.

The present inventors have recognized, among other things, that a problem to be solved includes that solutions of polycarbonate materials in a solvent or in a molten form can have too high of a viscosity for inkjet printing methods. The present subject matter described herein can provide a solution to this problem, such as by providing for one or more polycarbonate precursor solutions with a low solution viscosity.

The present inventors have recognized, among other things, that a problem to be solved can include that present inkjet printing methods require curing of the printed material with ultraviolet light, which requires line-of-sight for the UV light and can sometimes result in uneven curing. The present subject matter described herein can provide a solution to this problem, such as by providing for 3D inkjet printing of reactive polycarbonate compounds that can be polymerized by the application of heat, which can be applied evenly and reliably.

The present inventors have recognized, among other things, that a problem to be solved can include adhesion between layers of a part fabricated by 3D inkjet printing. The present subject matter described herein can provide a solution to this problem, such as by providing for printing of reactive solutions of polycarbonate precursor compounds that can react and crosslink between layers. Document WO-A-2015014381 discloses a system for fabricating a part, the system comprising: one or more dispensers each comprising a reservoir, one or more print heads configured to selectively print one or more droplets formed of one or more polycarbonate precursor solutions comprising one or more polycarbonate precursor compounds onto each of one or more target locations on a substrate within build area to form one or more reactive mixture droplets at each of the one or more target locations; and an environmental system configured to expose the reactive mixture droplets to at least one of a selected pressure and a selected temperature to polymerize the one or more polycarbonate precursor compounds to form a polycarbonate.

### BRIEF DESCRIPTION OF THE FIGURES

**FIG. 1** is a schematic diagram of an example system for fabricating a polycarbonate part via inkjet printing.
**FIG. 2** is a schematic diagram of another example system for fabricating a polycarbonate part via inkjet printing.
**FIG. 3** is a flow diagram of an example method of fabricating a polycarbonate part via inkjet printing.

### DETAILED DESCRIPTION

One such method is referred to as inkjet printing, which uses one or more inkjet print heads and nozzles to selectively print a build material to fabricate parts in a layer-by-layer manner. A layer of the build material can printed onto a build area, followed by curing the printed build material, such as with an energy source (e.g., a ultraviolet light lamp), to build each layer as a cross-section of the final part to be fabricated.

3D inkjet printing is a method of fabricating parts by selectively printing droplets of a build material, or droplets of precursors of the build material, onto a substrate in a build area. 3D inkjet printing is gaining popularity due to its versatility and high speed of construction. A plurality of print heads, often referred to as inkjet print heads, can be used to print the build material or one or more build material precursors onto one or more target locations corresponding to a cross-sectional area of desired structure. A layer of the build material or build material precursors can be selectively printed onto the one or more target areas within a build area. The build area can be defined by a specified coordinate system, such as a Cartesian coordinates so that CAD data can be used to direct the one or more print heads. The one or more print heads can selectively print the build materials or build material precursors onto the one or more target locations corresponding to the cross-section of a layer. The build material or build material precursors can be subject to environmental conditions configured to form a final solidified build material, such as exposure to a curing energy source (e.g., ultraviolet light), or at least one of a specified temperature and a specified pressure that can result in reaction of the build material precursors, such as polymerization, to form a solidified build material. In an example, each of the selected pressure and the selected temperature can be different than a respective ambient pressure and ambient temperature. "Ambient," as used herein, refers to the conditions (e.g., temperature or pressure) outside of the printing system, e.g., the uncontrolled temperature and pressure in the outside environment. This process optionally can be repeated to print further layers, such as a second layer on the first layer, a third layer on the second layer, a fourth layer on the third layer, a fifth layer on the fourth layer, and so on, until the specified structure is completed.

The present disclosure describes 3d inkjet printing systems and methods for fabricating polycarbonate structures by selectively printing droplets of one or more reactive polycarbonate precursors onto selected target areas on a substrate, permitting the formation of polycarbonate structures using 3D inkjet printing systems and methods. The systems and methods described herein involve printing a plurality of first droplets of a first polycarbonate precursor and printing a plurality of second droplets of a second polycarbonate precursor. The first and second precursors can react when the first and second droplets mix together at a target location and form a polycarbonate. As described in more detail below, the polycarbonate precursors can include one or more carbonates that are reactive toward transesterification reaction (such as one or more diarylcarbonates, for example bismethylsalicylcarbonate (BMSC)) and one or more dihydroxy compounds (such as a dihydroxy aromatic compound, for example bisphenol A).

### REACTIVE POLYCARBONATE PRINTING SYSTEMS

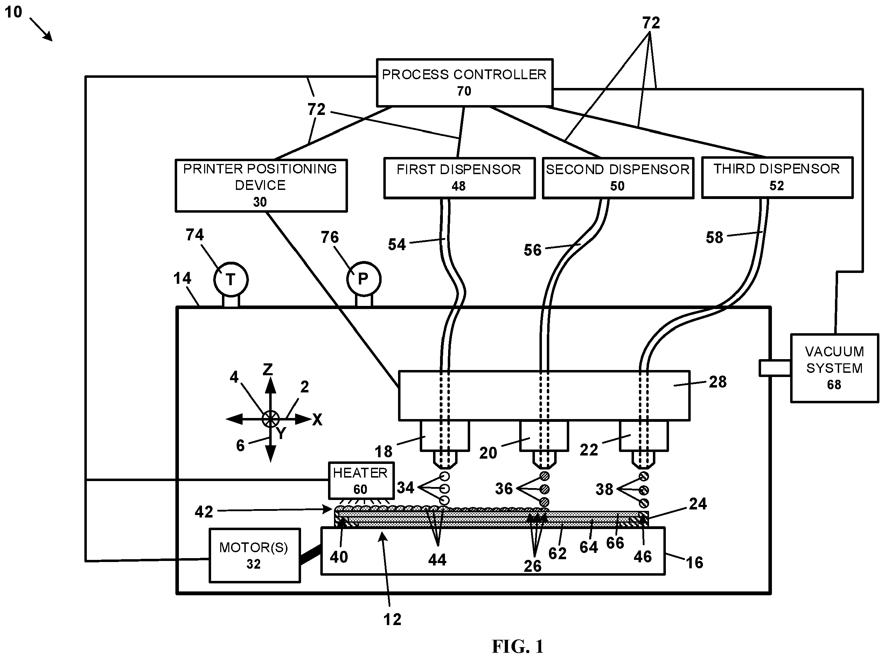

**FIG. 1** shows an example of an inkjet printing system 10 for fabricating a polycarbonate structure 12 by printing one or more reactive polycarbonate precursor compounds to form a polycarbonate. The printing system 10 can include a build chamber 14 enclosing a substrate 16 onto which the structure 12 is to be built. The system 10 includes a first print head 18 for printing a first polycarbonate precursor solution, also referred to as a first precursor print head 18. The system 10 includes a second print head 20 for printing a second polycarbonate precursor solution, also referred to as a second precursor print head 20. The first precursor print head 18 and the second precursor print head 20 are also referred to collectively as "build material precursor print heads 18, 20" or simply "print heads 18, 20." The system can include a third print head 22 for dispensing one or more third materials, such as a catalyst solution or a support material (as described in more detail below). Additional print heads beyond the build material precursor print heads 18, 20 and the third print head 22, if present, can also be included in the system 10. For example, if the third print head 22 is configured to print a support material or a support material precursor (referred to hereinafter as a "support material" for the sake of brevity) to form one or more support structures 24, then the system can include a fourth print head that is configured to print a catalyst material (described below) or to print other materials, such as a surface protectant or a colorant.

Each print head 18, 20, 22 can be moved relative to the substrate 16 so that each print head 18, 20, 22 can be selectively aimed onto any of a plurality of target locations 26 on the surface of the substrate 16 or on the surface of a top-most layer that has been built on the substrate 16. According to an example, the print heads 18, 20, 22 can be coupled to a print head block 28 that is movable over the substrate 16 to selectively aim each of the print heads 18, 20, 22 toward a desired target location. The print head block 28 can be movable in any direction within a specified coordinate system, such as a Cartesian coordinate system or a polar coordinate system. According to an example, the print head block 28 can be movable over the substrate 16 in an X direction 2 (shown as being from left to right in **FIG. 1**) and in a Y direction 4 (shown as being into and out of the page in **FIG. 1**). According to an example, the X direction 2 is substantially orthogonal to the Y direction 4. According to an example, both the X and Y directions 2, 4 are substantially parallel to the top surface of the substrate 16. In an example, the print head block 28 is movable by a printer positioning device 30 according to the specified coordinate system, e.g., by moving the print head block 28 along the X direction 2 and the Y direction 4 over the substrate 16, such as with one or more motors, screw drives, or other moving mechanisms. According to an example, the printer positioning device 30 can also move the print head block 28 in a Z direction 6 (shows as being up and down in **FIG. 1**). According to an example, the Z direction 6 is substantially orthogonal to one or more of the X direction 2, the Y direction 4, and the top surface of the substrate 16. Alternatively or in addition to the printer positioning device 30, the substrate 16 can be movable in one or more directions, such as one or more of the X, Y, and Z directions 2, 4, 6, by a separate substrate moving device, such as one or more motors 32.

Each print head 18, 20, 22 can print droplets of the solution being fed to the print head 18, 20, 22. The first print head 18 can print first droplets 34 of a first polycarbonate precursor solution that includes a first precursor (e.g., one or more carbonate precursor compounds that are reactive toward transesterification reaction with the second precursor). The second print head 20 can print second droplets 36 of a second polycarbonate precursor solution that includes a second precursor (i.e.,, one or more dihydroxy precursor compounds), also referred to as second solution droplets 36. The third print head 22 can print third droplets 38. The third droplets 38 can comprise a support material that can be printed to form support structures 24, e.g., to provide support for an overhang 40 of the structure 12. The third droplets can comprise a catalyst solution with a catalyst for the polymerization reaction between the dihydroxy precursor and the carbonate precursor (e.g., a transesterification catalyst).

According to an example, the first print head 18 prints the first droplets 34 onto each of one or more target locations 26 where the build material is to be printed for building an active layer 42 of the structure 12 being built. The term "active layer," as used herein, refers to the layer of the structure 12 currently being printed by the printing system 10, which corresponds to a cross section of the final structure 12, as described above. The second print head 20 prints the second droplets 36 onto each of the same one or more target locations 26 for building the active layer 42. According to an example, at each of the target locations 26, one or more first droplets 34 and one or more second droplets 36 can be printed successively so that the one or more first droplets 34 and the one or more second droplets 36 combine at the target location 26 to form a reactive mixture droplet 44 at each target location 26. The term "successively," "successive," or similar language, as used herein, refers to the one or more first droplets 34 being printed separately from the one or more second droplets 36. For example, the first droplet or droplets 34 can be printed to a particular target location 26 first and then the second droplet or droplets 36 can be printed to the same target location 26 to combine with the printed first droplet 34 to form the reactive mixture droplet 44, or vice versa, with the second droplet or droplets 36 being printed to the target location 26 first and then the first droplet or droplets 34 being printed to the target location 26 to combine with the printed second droplet 36 to form the reactive mixture droplet 44.

In an example, the third print head 22 is configured to print droplets 38 of a support material onto selected target locations, referred to as support locations 46, in order to provide support to portions of the structure 12 that would otherwise be unsupported then printed, such as the overhangs 40. In an example, the third print head 22 can be configured to print droplets 38 of a catalyst solution to the plurality of target areas 26. The catalyst solution can comprise a transesterification catalyst for the polymerization reaction between a dihydroxy precursor compound and a carbonate precursor compound to form the final build material. Alternatively, the catalyst can be included as part of one or both of the first precursor solution or the second precursor solution.

As is further shown in **FIG. 1**, the printing system 10 can include one or more dispensing devices for dispensing the solutions being printed by the print heads 18, 20, 22. A first dispenser 48 can dispense a first fluid (e.g., the first polycarbonate precursor solution) to the first print head 18. A second dispenser 50 can dispense a second fluid (e.g., the second polycarbonate precursor solution) to the second print head 20. A third dispenser 52 can dispense a third fluid (e.g., a support material or a catalyst solution) to the third print head 22. Each dispenser 48, 50, 52 can include a reservoir for the fluid being dispensed to the respective print head 18, 20, 22. Each dispenser 48, 50, 52, can also include a pump or other fluid displacement device for moving the fluid from the reservoir to its respective print head 18, 20, 22. In an example, the fluids being dispensed to the print heads 18, 20, 22 can be fed through flexible conduits, such as flexible tubing or piping, to accommodate movement of the print head block 28 and the print heads 18, 20, 22. A first flexible conduit 54 can carry the first precursor solution to the first print head 18. A second flexible conduit 56 can carry the second precursor to the second print head 20. A third flexible conduit 58 can carry the third fluid (e.g., the support material or the catalyst solution) to the third print head 22.

The printing system 10 can include an environmental system to control one or more conditions that the printed materials are exposed to, such as to facilitate polymerization of the first polycarbonate precursor and the second polycarbonate precursor. According to an example, the environmental system can provide for reaction and polymerization of one or more dihydroxy precursor compounds (e.g., bisphenol A) and one or more carbonate precursor compounds (e.g., bismethylsalicylcarbonate). According to an example, the environmental system can control at least one of a temperature and a pressure that the printed reactive mixture droplets are exposed to, e.g., to at least one of a selected pressure and a selected temperature, to provide for polymerization of the one or more polycarbonate precursor compounds in the reactive mixture droplets. According to an example, each of the selected pressure and the selected temperature are different than a respective ambient pressure and ambient temperature. The environmental system can control one or more conditions in order to facilitate formation of the support structures 24. The environmental system can include a heater 60 for controlling the temperature of the reactive mixture droplets 44 to a specified temperature that have been printed at the target locations 26. The heater 60 can be configured to heat the reactive mixture droplets 44 to a reaction temperature, which can initiate and propagate a polymerization reaction of the polycarbonate precursor compounds to form a polycarbonate material to build a solidified or substantially solidified active layer 42. The active layer 42 can be built on a substrate 16. The active layer 42 can be formed on top of previously built layers 62, 64, 66, e.g., so that the active layer 42 is part of a multi-layer structure 12.

According an example, the heater 60 is configured for localized heating of the printed reactive mixture droplets 44. Localized heating can allow other equipment with in the build chamber, such as the print heads 18, 20, 22, to not be subjected to substantially elevated temperatures. An example of a localized heater 60 includes, but is not limited to, a radiant heater such as an infrared (IR) heating device that selectively emits IR radiation onto a selected area of the printed reactive mixture droplets 44. The heater 60 can be movable over the top of the active layer 42 being built, such as with a motor or other moving device. The position of the heater 60 can be controlled in order to control what area of the active layer 42 is heated and for what period of time. In an example, the heater 60 can be controlled to scan or scroll along over the top of the printed active layer 42 at a specified rate to heat the printed reactive mixture droplets 44 that form the active layer 42 in a substantially continuous manner.

For reactions between one or more dihydroxy precursor and one or more carbonate precursor, the heater 60 can be configured to locally heat the reactive mixture droplets 44 to a reaction temperature of from about 100 °C to about 400 °C, such as about 200 °C. The actual reaction temperature provided by the heater 60 can depend on a number of factors, including one or both of the concentrations of the build material precursors and the catalyst present in the reactive mixture droplets 44 and a desired reaction rate for the polymerization of the precursors. In an example, the reaction rate selected can be fast enough such that the active layer 42 polymerizes to such an extent that the active layer 42 can support printing of a subsequent layer before printing of the subsequent layer is commenced. According to an example, the reaction temperature provided by the heater 60 can be selected to polymerize the polycarbonate precursor compounds to a B-stage level of polymerization and then a subsequent layer of the polycarbonate precursor solutions can be printed on top of the B-staged polymer layer.

The reaction rate can be selected to be slow enough so that full polymerization and solidification of the active layer 42 does not occur until after the subsequent layer has been printed. This can allow the printed reactive mixture droplet 44 that make up the active layer 42 to further combine during printing to form a substantially continuous active layer 42 with a substantially flat surface. It can also allow the partially polymerized solution of the reactive mixture droplets 44 to intermix at least partially with a previously built layer 66 immediately below the active layer 42, or can allow for better diffusion of the polycarbonate precursor compounds into the previously built layer 66, while the precursor droplets 34, 36 are being printed to form the reactive mixture droplets 44 and thus can allow for some crosslinking between layers 42 and 66 because the solution of the previously built layer 66 may not be fully polymerized. Similarly, a slower reaction rate can allow the subsequently built layer that is printed on top of the active layer 42 to partially intermix with the active layer 42 and/or for better diffusion of the polycarbonate precursor compounds into the active layer 42 to provide for at least partial crosslinking between the active layer 42 in **FIG. 1** and the subsequently built layer. Crosslinking within the same active layer 42, e.g., crosslinking among the reactive mixture droplets 44, or between layers of a multi-layer structure 12, can provide for a stronger and more unitary structure 12 than if the cross-linking did not occur.

The environmental system can include a vacuum system 68 for controlling a pressure within the build chamber 14. The application of a vacuum to the build chamber 14 can enable the polymerization reaction between the one or more dihydroxy precursor compounds and the one or more polycarbonate precursor compounds. For example, the vacuum system 68 can remove volatized solvent or byproducts from the polymerization reaction, such as ester-substituted phenols or other volatile byproducts that can either be present in the build material precursor solutions or that can be formed as the one or more dihydroxy precursor compounds and the one or more carbonate precursor compounds are polymerized to form the polycarbonate. In an example, the vacuum system 68 can be capable of applying a vacuum pressure of from about 3 kilopascal (kPa) (about 0.8 inches of mercury (in. Hg)) to about 100 kPa (about 30 in. Hg), such as from about 30 kPa (about 8.9 in. Hg) to about 98 kPa (about 29 in. Hg), as measured by a vacuum gauge that measures pressure relative to the surrounding atmospheric pressure, as opposed to a pressure gauge that measures absolute pressure.

The printing system 10 can include a control system to control one or more components of the system 10, such as one or more of the print heads 18, 20, 22, the printer positioning device 30, the one or more motors 32, and one or more of the dispensers 48, 50, 52. The control system can ensure that the first droplets 34 of the first precursor solution and the second droplets 36 of the second precursor solution are printed at specified times and onto specified target locations 26 to form a portion of the structure 12.

The control system can include one or more process controllers 70. The one or more process controllers 70 can process and provide instructions to components of the system. 10. The one or more process controllers 70 can take the form of any processing or controlling device capable of providing the instructions, including, but not limited to, one or more microprocessors, one or more controllers, one or more digital signal processor (DSP), one or more application-specific integrated circuit (ASIC), one or more field-programmable gate array (FPGA), or other digital logic circuitry. The instructions provided by the one or more process controllers 70 to the components of the system 10 can take the form of electrical signals via communication links 72. Each communication link 72 can be any wired or wireless connection that can transmit signals between the process controller 70 and the device or devices received the signals, such as the dispensers 48, 50, 52 or the printer positioning device 30. The one or more process controllers 70 can be configured so that the support material droplets 38 are printed at specified support locations 46 at specified times.

In some examples where a catalyst solution is printed separate from each of the first and second precursor solutions, for example as a catalyst solution that is printed from the third print head 22 as the third droplets 38, the one or more process controllers 70 can be configured so that the first droplets 34 of the first precursor solution, the second droplets 36 of the second precursor solution, and the third droplets 38 of the catalyst solution are printed at each target location and the first, second, and third droplets 34, 36, and 38 combine to form the reactive mixture droplet 44 at each target location 26.

The one or more process controllers 70 of the control system can be configured to control the environmental system. The one or more process controllers 70 can be configured to control the heater 60. The one or more process controllers 70 can be configured to control the vacuum system 68. The one or more process controllers 70 can control the reaction conditions to which the reactive mixture droplets 44 are exposed. The one or more process controllers 70 can control the heater 60 through a feedback system, such as with a temperature sensor 74 that determines the temperature of the reactive mixture droplets 44 being heated by the heater 60 and provide a temperature reading signal to the one or more process controllers 70. The one or more process controllers 70 can provide a control signal to the heater 60 in order to reach a set point temperature.

The one or more process controllers 70 can control the vacuum system 68 through a feedback system, such as with a pressure sensor 76 that can determine the pressure within the build chamber 14 and provide a pressure reading signal to the one or more process controllers 70. The one or more process controllers 70 can provide a control signal to the vacuum system 68 in order to reach a set point pressure.

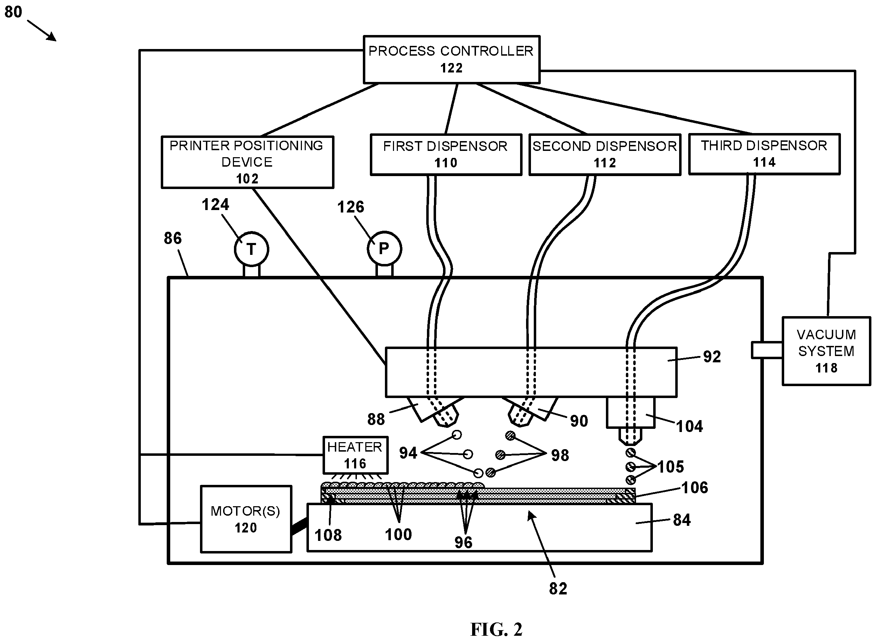

**FIG. 2** shows another example inkjet printing system 80 for fabricating a structure 82 by printing one or more polycarbonate precursor solutions onto a substrate 84 within a build chamber 86 to form a polycarbonate material. The printing system 80 of **FIG. 2** can include a first print head 88 for printing a first precursor solution and a second print head 90 for printing a second precursor solution. The first print head 88 can be aimed at the same location as the second print head 90 for printing the second precursor solution, e.g., so that when the print head block 92 that carries the print heads 88, 90 is stationary, one or more first droplets 94 of the first precursor solution will be aimed at the same target location 96 as one or more second droplets 98 of the second precursor solution. The physical aiming of the print heads 88, 90 can provide for precision and accuracy for directing the printing of the one or more first droplets 94 and the one or more second droplets 98 at the target locations 96 in order to form the reactive mixture droplets 100. The co-aiming of the print heads 88, 90 can also provide for faster mixing of the first and second precursor solutions in order to initiate the polymerization reaction, which can provide for more precision of the solutions without spreading due to flow of the solution.

The remainder of the printing system 80 shown in **FIG. 2** can be substantially similar or identical to system 10 shown in **FIG. 1****.** According to an example, the print head block 92 can be moved by a printer positioning device 102. The system 80 can include a third print head 104 to print one or more third droplets 105 of a material other than the precursor solutions. According to an example, the material printed by the third print head 104 can comprise a support material to form support structures 106 to support overhangs 108 of the structure 82 (as shown in **FIG. 2**). According to an example, the material printed by the third print head 104 can comprise a catalyst solution that is also aimed at the target locations 96 The catalyst solution can comprise a catalyst to a polymerization reaction of the polycarbonate precursor compounds present in the first and second polycarbonate precursor solutions.

One or more material dispensing systems can be included to dispense the solutions or fluids to the print heads 88, 90, 104. A first dispenser 110 can dispense the first precursor solution to the first print head 88. A second dispenser 112 can dispense the second precursor solution to the second print head 90. A third dispenser 114 can dispense a third fluid (e.g., a catalyst solution or a support material) to the third print head 104. The environment experienced by the reactive mixture droplets 100 can be controlled to provide for reaction between the precursor compounds in the one or more precursor solutions. According to an example, the system 80 can comprise a heater 116 to control the temperature within the build chamber 86. According to an example, the heater 116 can be a localized heater for localized heating of the printed reactive mixture droplets 100, including, but is not limited to, a radiant heater such as an infrared (IR) heating device, similar to the heater 60 described above with respect to the system 10 of **FIG. 1****.** According to an example, the system 80 can comprise a vacuum system 120 to control the pressure within the build chamber 86. The substrate 84 can be movable by a positioning device, such as one or more motors 120. One or more process controllers 122 can be provided to control operation of one or more of the components of the system 80, such as one or more of the print heads 88, 90, 104, the printer positioning device 102, the dispensers 110, 112, 114, the heater 116, the vacuum system 118, and the one or more motors 120 (if present). According to an example, one or both of a temperature sensor 124 and a pressure sensor 126 can be included so that the one or more process controllers 122 can control the heater 116 or the vacuum system 118, or both, through a feedback system, similar to what is described above with respect to system 10 of **FIG. 1****.**

### REACTIVE POLYCARBONATE PRINTING METHOD

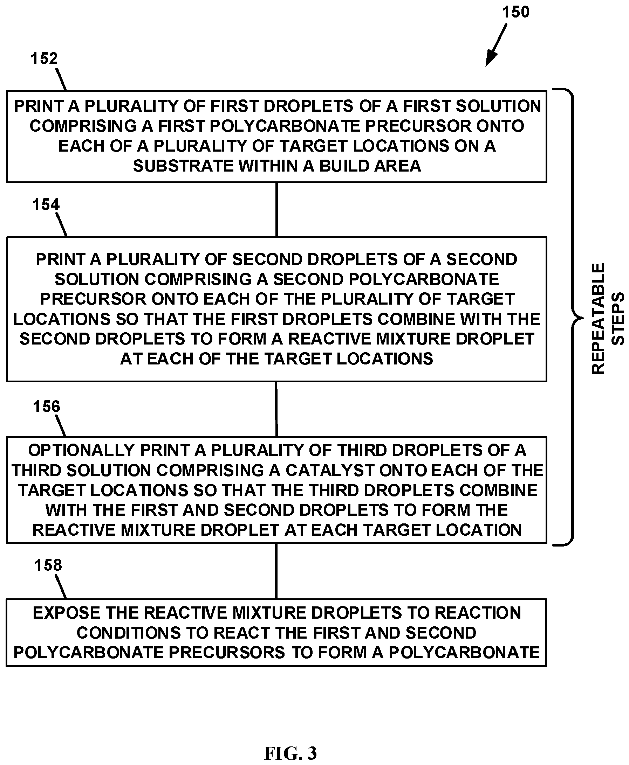

**FIG. 3** is a flow diagram of an example method 150 for forming a polycarbonate part by printing reactive polycarbonate precursors. The method 150 will be described with reference to the printing system 10, as described above with reference to **FIG. 1****.** However, the description of the method 150 with respect to specific structures shown in **FIGS. 1** and **2** and described above is intended to be for illustrative purposes only, and is not meant to be limiting to the method 150. It will be understood that variations can be performed without varying from the scope of the present invention.

The method 150 includes, at 152, printing one or more first droplets 34 of a first solution comprising a first polycarbonate precursor compound onto each of one or more target locations 26 on a substrate 16 within a build area, e.g., within the build chamber 14. The first polycarbonate precursor compound is one or more carbonate precursor compounds that are reactive toward transesterification reaction. Examples of the one or more carbonate precursors are described in more detail below. The one or more first droplets 34 can be printed by a first print head 18 configured to print the one or more first droplets 34 of the first precursor solution. A first dispenser 48 can feed the first precursor solution to the first print head 18 in a controlled manner.

The target locations 26 can correspond to a plurality of portions of a layer of a polycarbonate structure to be built. Each target location 26 can be identified and selected according to three-dimensional CAD data. The CAD data can be used to operate one or more process controllers 70. The one or more process controllers 70 can control the aim of the first print head 18 so that the one or more first droplets 34 are printed at the specified target locations 26. The CAD data can include prepared CAD data corresponding to the location of material in a cross section of the final structure 12.

At 154, one or more second droplets 36 of a second solution comprising a second polycarbonate precursor compound onto each of the one or more target locations 26. The second polycarbonate precursor compound is one or more dihydroxy compounds. Examples of the one or more dihydroxy compounds are described in more detail below. The one or more second droplets 36 can be printed by a second print head 20 configured to print the one or more second droplets 36 of the second precursor solution. A second dispenser 50 can feed the second precursor solution to the second print head 20 in a controlled manner.

The one or more first droplets 34 and the one or more second droplets 36 can be printed successively, e.g., with the one or more first droplets 34 being printed at a particular target location 26 followed by the one or more second droplets 36 being printed at the same target location 26, or vice versa. The one or more first droplets 34 and the one or more second droplets 36 can be printed substantially simultaneously at each specified target location 26. The printing of the first droplets 34 and the second droplets 36 at each target location 26 can allow the droplets 34, 36 to combine to form a reactive mixture droplet 44 at each of the target locations 26. The printing of one or more first droplets 34 and one or more second droplets 36 at each target location 26 can provide for mixing of the first and second solutions so that each reactive mixture droplet 44 is sufficiently mixed to provide for the polymerizing reaction between the first and second precursors (described in more detail below) to produce a polycarbonate structure 12.

In an example, steps 152 and 154 can be performed by printing a first of the first droplets 34 and a first of the second droplets 36 at a first target location 26 so that the first of the first droplets 34 and the first of the second droplets 36 combine at the first target location 26 to form a first reaction mixture droplet 44. Then, a second of the first droplets 34 and a second of the second droplets 36 can be printed at a second target location 26 so that the second of the first droplets 34 and the second of the second droplets 36 combine at the second target location 26 to form a second reaction mixture droplet 44. This can be repeated at each specified target location 26 until a layer of the structure 12 is completed.

In an example, at least one of the first solution or the second solution comprises a catalyst for the reaction of the first polycarbonate precursor compound with the second polycarbonate precursor compound to form a polycarbonate so that the catalyst is included as part of the first droplets 34 or the second droplets 36, or both, being printed onto the target areas 26. The method 150 can optionally include, at 156, printing one or more third droplets 38 of a third solution comprising a catalyst onto each of the target locations 26. The one or more third droplets 38 can be printed by a third print head 22 configured to print droplets 38 of the catalyst solution. A third dispenser 52 can feed the catalyst solution to the third print head 22 in a controlled manner. The third droplets 38 can be printed successively with the first and second droplets 34, 36 and combined with the first and second droplets 34, 36 to form the reactive mixture droplets 44. For example, the first, second, and third droplets 34, 36, 38 can be printed in any order to form the reactive mixture droplets 44 at each target location 26, including separate printing in time (such as: (1) first droplets 34, then second droplets 36, then third droplets 38; or (2) first droplets 34, then third droplets 38, then second droplets 36; or (3) second droplets 36, then first droplets 34, then third droplets 38; or (4) second droplets 36, then third droplets 38, then first droplets 34; or (5) third droplets 38, then first droplets 34, then second droplets 36; or (6) third droplets 38, then second droplets 36, then first droplets 34), or substantially simultaneous printing of any two or all three of the first, second, and third droplets 34, 36, 38..

At 158, the reactive mixture droplets 44 can be exposed to reaction conditions to react the first polycarbonate precursor compound (e.g., one or more carbonate compounds) and the second polycarbonate precursor compound (e.g., one or more dihydroxy compounds) to form a polycarbonate. The reaction conditions can include a polymerization temperature that allows for a polymerization reaction to occur between the first precursor and the second precursor to form a polycarbonate. In an example, the polymerization temperature can be from about 100 °C to about 400 °C.

The reaction condition can also include exposing the reactive mixture droplets 44 to a vacuum pressure. According to an example, the vacuum pressure can be from about 3 kilopascal (kPa) (about 0.8 inches of mercury (in. Hg)) to about 100 kPa (about 30 in. Hg), such as from about 30 kPa (about 8.9 in. Hg) to about 98 kPa (about 29 in. Hg), as measured by a vacuum gauge that measures pressure relative to the surrounding atmospheric pressure. The pressure to which the reactive mixture droplets 44 are exposed can be sufficiently low, e.g., a vacuum, that can allow for the removal of a carbonate residue byproduct from the build area, e.g., by evacuation from the build chamber 14.

Steps 152, 154, and optionally 156 can be repeated as many times as needed to build the structure 12 in a layer-by-layer manner in order to complete the structure 12, such as when a multi-layer structure 12 is being printed. According to an example where a multi-layer structure 12 is being printed, a first layer can be formed by selectively printing one or more first droplets 34 of a first polycarbonate precursor solution, one or more second droplets 36 of a second polycarbonate precursor solution, and, optionally, one or more third droplets 38 of a catalyst solution, to form reactive mixture droplets 44 at each of one or more specified target locations 26 corresponding to the first layer of the structure 12. The exposure of the reactive mixture droplets 44 to the reaction conditions (step 158) can be performed continuously as the droplets 34, 36, 38 are being printed to form the reactive mixture droplets 44 so that the reaction between the first and second precursors can proceed as the layer is being printed.

After the first layer is formed, a second layer can be formed on top of the first layer by selectively printing one or more first droplets 34 of the first polycarbonate precursor solution, one or more second droplets 36 of the second polycarbonate precursor solution, and, optionally, one or more third droplets 38 of a catalyst solution, to form reactive mixture droplets 44 at each of one or more target locations 26 corresponding to the second layer of the structure 12. Successive layers can be built (e.g., a third layer on the second layer, a fourth layer on the third layer, and so on) until the structure 12 is completed. Support structures 24 can be printed along with any layer to provide support for subsequently printed layers. If a single-layer structure 12 is being printed, than steps 152, 154, and optionally 156 need not be repeated to form the single-layer structure 12.

The systems 10, 80 and the method 150 described above for reactive inkjet printing of polycarbonate precursors can be combined with other methods of additive manufacturing, for example to make parts that include materials other than polycarbonates, including, but not limited to other polymer materials, metals, or other dispensable or printable materials. Examples of other additive manufacturing methods that can be combined with the systems 10, 80 and the method 150 described herein include, but are not limited to, UV cured printing, radical initiated printing, selective laser sintering, material extrusion printing, stereolithography, and the like.

### MATERIALS FOR REACTIVE POLYCARBONATE PRINTING

The printing systems 10, 80 described above with respect to **FIGS. 1** and **2** and the method 150 described above with respect to **FIG. 3** can be performed with the following materials.

The printing systems 10, 80 is configured to provide for reactive printing of polycarbonate materials. The polycarbonate can comprise a polycarbonate compound formed from repeat units derived from at least one dihydroxy compound. As used herein, when describing a polycarbonate, the expression "polycarbonate repeat units derived from at least one dihydroxy compound" can refer to a repeat unit incorporated into an oligomeric or polymeric polycarbonate by reaction of a dihydroxy compound with a source of carbonyl units, for example the reaction of bisphenol A with bis(methyl salicyl) carbonate. As used herein, "dihydroxy compound" can refer to a compound comprising at least two hydroxyl groups, each hydroxyl group comprising an oxygen atom covalent bonded to a hydrogen atom. As used herein, "carbonyl units" can refer to a group comprising a carbon atom double-bonded to an oxygen atom.

As used herein, the term "polycarbonate" can refer to polycarbonates incorporating repeat units derived from one or more dihydroxy compound, such as a dihydroxy aromatic compound, and includes copolyestercarbonates. In an embodiment, the one or more polycarbonates can comprise repeat units derived from resorcinol. In an embodiment, the one or more polycarbonate can comprise repeat units derived from bisphenol A. In an embodiment, the one or more polycarbonates can comprise repeat units derived from dodecandioic acid. Nothing in the description and claims of this application should be taken as limiting the polycarbonate to only one dihydroxy residue unless the context is expressly limiting. Thus, application polycarbonate can comprise copolycarbonates with residues of 2, 3, 4, or more types of dihydroxy compounds.

In an embodiment, the polycarbonate formed by the systems 10, 80 or the method 150 can have specified material properties, including, but not limited to, a heat deflection, transparency, durability, high impact resistance, electrical insulating. In an embodiment, the polycarbonate formed can have a heat deflection of at least 120 °C.

As noted above, the first precursor solution printed by the system 10, 80 comprises one or more carbonate compounds that are each reactive toward transesterification reactions. According to an embodiment, the one or more carbonate compounds can comprise diarylcarbonate. A second precursor printed by the system 10, 80 can comprise one or more dihydroxy compounds. According to an embodiment, the one or more dihydroxy compounds can comprise one or more dihydroxy aromatic compounds.

### CARBONATE PRECURSOR COMPOUND

Each of the one or more carbonate precursor compounds can be a diarylcarbonate that is suitable for melt-transesterification or transcarbonization. Each of the one or more carbonates can be derived from an activated dicarbonate. Each of the one or more carbonates can be derived from a mixture of an activated carbonate with diphenyl carbonate. In an embodiment, an activated carbonate comprises an activated diarylcarbonate such as bismethylsalicylcarbonate (BMSC). As used herein the term "activated carbonate" can refer to a diarylcarbonate that is more reactive than diphenylcarbonate toward transesterification reactions. In an embodiment, each activated carbonate of the one or more carbonates can have the general formula: 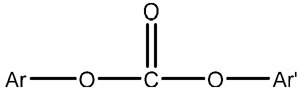 wherein Ar and Ar' are each independent substituted aromatic radicals having 6 to 30 carbon atoms. In an embodiment, each activated carbonate of the one or more carbonates has the general formula: 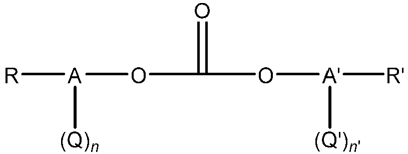 wherein Q and Q' are each independently activating groups. A and A' are each independently aromatic rings which can be the same or different depending on the number and location of their substituent groups, and n or n' are whole numbers of zero up to a maximum equivalent to the number of replaceable hydrogen groups substituted on the aromatic rings A and A', wherein n+n' is greater than or equal to 1. R and R' can each be independently substituent groups such as alkyl, substituted alkyl, cycloalkyl, alkoxy, aryl, alkylaryl, cyano, nitro, halogen, and carboalkoxy. The number of R groups can be a whole number and can be 0. In an embodiment, the maximum number of R groups can be equivalent to the number of replaceable hydrogen groups on the aromatic rings A minus the number n. The number of R' groups can be a whole number and can be 0. In an embodiment, the maximum number of R' groups can be equivalent to the number of replaceable hydrogen groups on the aromatic rings A minus the number n'. In an embodiment, the number, type, and location of the R substituents on the aromatic ring A is not limited unless it deactivates the carbonate and leads to a carbonate that is less reactive than diphenylcarbonate. In an embodiment, the number, type, and location of the R' substituent on the aromatic ring A' is not limited unless it deactivates the carbonate and lead to a carbonate which is less reactive than diphenylcarbonate.

According to an embodiment, each of the activating groups Q and Q' can include, but are not limited to: alkoxycarbonyl groups, halogens, nitro groups, amide groups, sulfone groups, sulfoxide groups, or imine groups. According to an embodiment, the activating groups can have the structures indicated below: 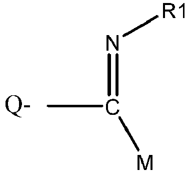
-Q
Q = Halogen or NO₂

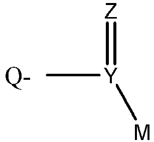

Y = C, N, S, SO
Z=O,N
M = N-Dialkyl, Alkyl, Aryl, Aryloxy, Alkoxy
R1 = Alkyl or Aryl

According to an emdodiment, each of the activated carbonates can include, but are not limited to: bis(o-methoxycarbonylphenyl)carbonate, bis(o-chlorophenyl)carbonate, bis(o-nitrophenyl)carbonate, bis(o-acetylphenyl)carbonate, bis(o-phenylketonephenyl)carbonate, bis(o-formylphenyl)carbonate. Unsymmetrical combinations of these structures, where the substitution number and type on A and A' are different, are also possible to employ. In an embodiment, an activated carbonate is an ester-substituted diarylcarbonate having the structure: 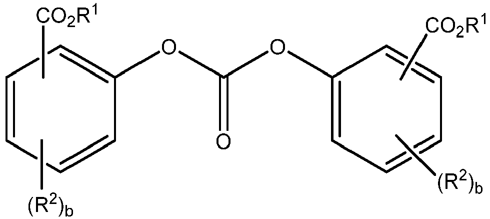 wherein R¹ is independently at each occurrence and comprises a C₁-C₂₀ alkyl radical, a C₄-C₂₀ cycloalkyl radical, or a C₄-C₂₀ aromatic radical; R² is independently at each occurrence and comprises a halogen atom, a cyano group, a nitro group, a C₁-C₂₀ alkyl radical, a C₄-C₂₀ cycloalkyl radical, a C₄-C₂₀ aromatic radical, a C₁-C₂₀ alkoxy radical, a C₄-C₂₀ cycloalkoxy radical, a C₄-C₂₀ aryloxy radical, a C₁-C₂₀ alkylthio radical, a C₄-C₂₀ cycloalkylthio radical, a C₄-C₂₀ arylthio radical, a C₁-C₂₀ alkylsulfinyl radical, a C₄-C₂₀ cycloalkylsulfinyl radical, a C₄-C₂₀ arylsulfonyl radical, a C₁-C₂₀ alkylsulfonyl radical, a C₄-C₂₀ cycloalkylsulfonyl radical, a C₄-C₂₀ arylsulfonyl radical, a C₁-C₂₀ alkoxycarbonyl radical, a C₄-C₂₀ cycloalkoxycarbonyl radical, a C₄-C₂₀ aryloxycarbonyl radical, a C₂-C₆₀ alkylamino radical, a C₆-C₆₀ cycloalkylamino radical, a C₅-C₆₀ arylamino radical, a C₁-C₄₀ alkylaminocarbonyl radical, a C₄-C₄₀ cycloalkylaminocarbonyl radical, a C₄-C₄₀ arylaminocarbonyl radical, or a C₁-C₂₀ acylamino radical; and b is independently at each occurrence with an integer from 0-4. In an embodiment, at least one of the substituents CO₂R¹ is attached in an ortho position relative to the carbonate group.

According to an embodiment, the one or more carbonates can comprise an ester-substituted diarylcarbonates. In an embodiment, the ester-substituted diarylcarbonate comprises, but is not limited to, bis(methylsalicyl)carbonate (BMSC), bis(ethyl salicyl)carbonate, bis(propyl salicyl) carbonate, bis(butylsalicyl) carbonate, bis(benzyl salicyl)carbonate, or bis(methyl 4-chlorosalicyl)carbonate. In an embodiment, BMSC can be preferred for use in melt polycarbonate synthesis due to its lower molecular weight and higher vapor pressure.

One method for determining whether a certain diarylcarbonate is sufficiently activated is to carry out a model transesterification reaction between the diarylcarbonate in question with a phenol. In an example, the phenol used can be p-(1,1,3,3-tetramethyl)butylphenol because it possesses only one reactive site, possesses a low volatility and possesses a similar reactivity to bisphenol A. The model transesterification reaction can be carried out at a temperature above the melting points of the diarylcarbonate in question and the phenol and in the presence of a transesterification catalyst, such as an aqueous solution of sodium hydroxide or sodium phenoxide. The concentration of the transesterification catalyst can be about 0.001 mole% based on the number of moles of the phenol or the diarylcarbonate. According to an example, the reaction temperature can be about 200 °C. The choice of conditions and catalyst concentration can be adjusted depending on the reactivity of the reactants to provide a convenient reaction rate. In an example, the reaction temperature is below the degradation temperature of the reactants. Sealed tubes can be used if the reaction temperatures cause the reactants to volatilize and affect the reactant molar balance. The determination of the equilibrium concentration of reactants can be accomplished through reaction sampling during the course of the reaction and then analysis of the reaction mixture using a detection method, such as high-pressure liquid chromatography (HPLC). Particular care can be taken so that reaction does not continue after the sample has been removed from the build area, such as by cooling down the part, for example in an ice bath, or by employing a reaction quenching acid, such as acetic acid in the water phase of the HPLC solvent system, or both. A reaction quenching acid can also be introduced directly into the reaction sample in addition to cooling the reaction mixture. The acetic acid can have a concentration in the water phase of the HPLC solvent system of about 0.05% volume per volume (v/v).

According to an example, the equilibrium constant can be determined from the concentration of the reactants and product when equilibrium is reached. In an example, equilibrium can be assumed to have been reached when the concentration of components in the reaction mixture reach a point of little or no change on sampling of the reaction mixture. According to an example, the equilibrium constant can be determined from the concentration of the reactants and products at equilibrium. According to an embodiment, a diarylcarbonate that possesses a relative equilibrium constant (K*ₜₑₛₜ*/K*_{DPC}*) of greater than 1 is considered to possess a more favorable equilibrium than diphenylcarbonate, and thus can be considered an activated carbonate, as that term is used herein. According to an embodiment, a diarylcarbonate that possesses an equilibrium constant of 1 or less can be considered to possess the same or a less favorable equilibrium than diphenylcarbonate, and thus can be considered not to be activated, as that term is used herein. According to an embodiment, an activated carbonate with very high reactivity compared to diphenylcarbonate can be employed when conducting transesterification reactions. According to an example, an activated carbonate with an equilibrium constant greater than at least 10 times that of diphenylcarbonate can be used.

Some non-limiting examples of non-activating groups which, when present in an ortho position relative to the carbonate group, would not be expected to result in activated carbonates are alkyl, cycolalkyl or cyano groups. Some specific and non-limiting examples of non-activated carbonates are bis(o-methylphenyl)carbonate, bis(p-cumylphenyl)carbonate, bis(p-(1,1,3,3-tetramethyl)butylphenyl)carbonate and bis(o-cyanophenyl)carbonate. Unsymmetrical combinations of these structures are also expected to result in non-activated carbonates.

Unsymmetrical diarylcarbonates wherein one aryl group is activated and one aryl is unactivated can also be used as one or more of the carbonate precursor compounds, for example if the activating group renders the overall reactivity of the diaryl carbonate to be greater than diphenyl carbonate.

Each of the one or more carbonate precursor compounds can also be derived from dicarboxylic acids, dicarboxylic acid esters, or dicarboxylic acid halides. Such constituent repeating units can be polyester-polycarbonate units. Examples of dicarboxylic acids include, but are not limited to, terephthalic acid, isophthalic acid, sebacic acid, decanedioic acid, and dodecanedioic acid. Examples of dicarboxylic acid esters include, but are not limited to, diphenyl sebacate, diphenyl terephthalate, diphenyl isophthalate, diphenyl decanedioate, and diphenyl dodecanedioate. Examples of dicarboxylic acid halides include, but are not limited to, terephthaloyl chloride, isophthaloyl chloride, sebacoyl chloride, decanedioyl chloride, and dodecanedioyl chloride. According to an embodiment, polyester-polycarbonate units can be present in proportions of up to 50 mole %, such as 30 mole % or less, in copolymerized polycarbonates.

According to an embodiment, the theoretical stoichiometry of the reaction within the reactive mixture droplets 44, 100 can require a molar ratio of the one or more dihydroxy precursor compounds to the one or more diaryl carbonate precursor compounds of 1:1. It has been found, however, that a molar ratio of from about 0.25:1 to about 3:1, such as from about 1:0.95 to about 1:1.05, for example from about 1:0.98 to about 1:1.02 can be effectively employed.

### DIHYDROXY PRECURSOR COMPOUND

The one or more dihydroxy precursor compounds can comprise aliphatic compounds or aromatic compounds. The following is a non-limiting list of such compounds:

### Aliphatic Diols

In an embodiment, the one or more dihydroxy precursor compounds comprise one or more aliphatic diols including, but not limited to: isosorbide; 1,4:3,6-dianhydro-D-sorbitol; tricyclodecane-dimethanol (TCDDM); 4,8-bis(hydroxymethyl)tricyclodecane; tetramethylcyclobutanediol (TMCBD); 2,2,4,4,-tetramethylcyclobutane-1,3-diol; ; cyclohex-1,4-ylenedimethanol; trans-1,4-cyclohexanedimethanol (tCHDM); trans-1,4-bis(hydroxymethyl)cyclohexane; cis-1,4-cyclohexanedimethanol (cCHDM); cis-1,4-bis(hydroxymethyl)cyclohexane; cis-1,2,-cyclohexanedimethanol; 1,1'-bi(cyclohexyl)-4,4'-diol; dicylcohexyl-4,4'-diol; 4,4'-dihydroxybicyclohexyl; and poly(ethylene glycol).

### Aliphatic Acids

In an embodiment, the one or more dihydroxy precursor compounds comprise one or more aliphatic acids including, but not limited to: 1,10-dodecanedioic acid (DDDA); adipic acid; hexanedioic acid; isophthalic acid; 1,3-benzenedicarboxylic acid; teraphthalic acid; 1,4-benzenedicarboxylic acid; 2,6-Naphthalenedicarboxylic acid; 3-hydroxybenzoic acid (mHBA); and 4-hydroxybenzoic acid (pHBA).

### Aromatic Dihydroxy Compounds

In an embodiment, the one or more dihydroxy precursor compounds comprise one or more aromatic dihydroxy compounds. In an embodiment, the one or more aromatic dihydroxy compounds comprise one or more bisphenols, such as bisphenol A (BPA). In an embodiment, a bisphenol precursor has the general structure, 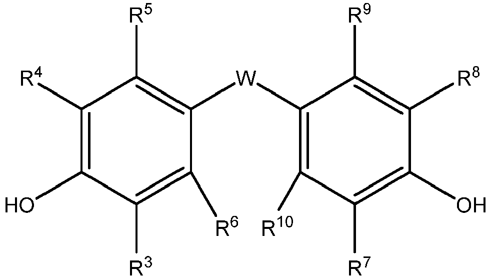 wherein each of R³, R⁴, R⁵, R⁶, R⁷, R⁸, R⁹, and R¹⁰ can each independently be selected from a hydrogen atom, a halogen atom, a nitro group, a cyano group, a C₁-C₂₀ alkyl radical, a C₄-C₂₀ cycloalkyl radical, or a C₆-C₂₀ C aryl radical; W is a bond, an oxygen atom, a sulfur atom, a SO₂ group, a C₁-C₂₀ aliphatic radical, a C₆-C₂₀ aromatic radical, a C₆-C₂₀ cycloaliphatic radical, or the group 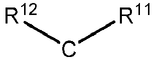 wherein each of R¹¹ and R¹² can each independently be selected from a hydrogen atom, a C₁-C₂₀ alkyl radical, a C₄-C₂₀ cycloalkyl radical, or a C₄-C₂₀ aryl radical. Alternatively, R¹¹ and R¹² together can form a C₄-C₂₀ cycloaliphatic ring that can be optionally substituted by one or more C₁-C₂₀ alkyl, C₆-C₂₀ aryl, C₅-C₂₁ aralkyl, or C₅-C₂₀ cycloalkyl groups, or a combination thereof.

In an embodiment, the one or more dihydroxy precursor compounds can comprise a dihydroxy benzene having the general structure 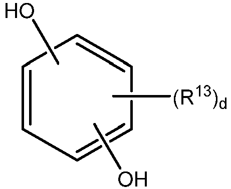 wherein each occurrence of R¹³ can be independently selected from a hydrogen atom, a halogen atom, a nitro group, a cyano group, a C₁-C₂₀ alkyl radical, a C₄-C₂₀ cycloalkyl radical, or a C₄-C₂₀ aryl radical, and d is an integer from 0 to 4.

In an embodiment, the one or more dihydroxy precursor compounds comprise a dihydroxy naphthalene having one of the following general structures: 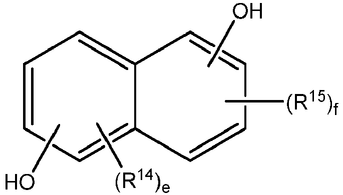 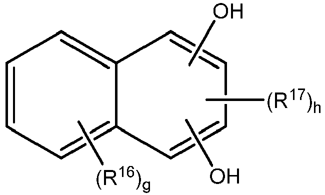 wherein each occurrence of R¹⁴, R¹⁵, R¹⁶ and R¹⁷ can be independently selected from a hydrogen atom, a halogen atom, a nitro group, a cyano group, a C₁-C₂₀ alkyl radical, a C₄-C₂₀ cycloalkyl radical, or a C₄-C₂₀ aryl radical, e and f are integers from 0 to 3, g is an integer from 0 to 4, and h is an integer from 0 to 2.

In an embodiment, the one or more dihydroxy precursor compounds comprise one or more bisphenols including, but are not limited to: 2,2-bis(4-hydroxyphenyl)propane (bisphenol A); 2,2-bis(3-chloro-4-hydroxyphenyl)propane; 2,2-bis(3-bromo-4-hydroxyphenyl)propane; 2,2-bis(4-hydroxy-3-methylphenyl)propane; 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 2,2-bis(3,5-dichloro-4-hydroxyphenyl)-propane; 2,2-bis(3,5-dibromo-4-hydroxyphenyl)propane; 2,2-bis(3,5-dimethyl-4-hydroxyphenyl)propane; 2,2-bis(3-chloro-4-hydroxy-5-methylphenyl)propane; 2,2-bis(3-bromo-4-hydroxy-5-methylphenyl)propane; 2,2-bis(3-chloro-4-hydroxy-5-isopropylphenyl)propane; 2,2-bis(3-bromo-4-hydroxy-5-isopropylphenyl)propane; 2,2-bis(3-t-butyl-5-chloro-4-hydroxyphenyl)propane; 2,2-bis(3-bromo-5-t-butyl-4-hydroxyphenyl)propane; 2,2-bis(3-chloro-5-phenyl-4-hydroxyphenyl)propane; 2,2-bis(3-bromo-5-phenyl-4-hydroxyphenyl)propane; 2,2-bis(3,5-disopropyl-4-hydroxyphenyl)propane; 2,2-bis(3,5-di-t-butyl-4-hydroxyphenyl)propane; 2,2-bis(3,5-diphenyl-4-hydroxyphenyl)propane; 2,2-bis(4-hydroxy-2,3,5,6-tetrachlorophenyl)propane; 2,2-bis(4-hydroxy-2,3,5,6-tetrabromophenyl)propane; 2,2-bis(4-hydroxy-2,3,5,6-tetramethylphenyl)propane; 2,2-bis(2,6-dichloro-3,5-dimethyl-4-hydroxyphenyl)propane; 2,2-bis(2,6-dibromo-3,5-dimethyl-4-hydroxyphenyl)propane; 1,1-bis(4-hydroxyphenyl)cyclohexane; 1,1-bis(3-chloro-4-hydroxyphenyl)cyclohexane; 1,1-bis(3-bromo-4-hydroxyphenyl)cyclohexane; 1,1-bis(4-hydroxy-3-methylphenyl)cyclohexane; 1,1-bis(4-hydroxy-3-isopropylphenyl)cyclohexane; 1,1-bis(3-t-butyl-4-hydroxyphenyl)cyclohexane; 1,1-bis(3-phenyl-4-hydroxyphenyl)cyclohexane; 1,1-bis(3,5-dichloro-4-hydroxyphenyl)cyclohexane; 1,1-bis(3,5-dibromo-4-hydroxyphenyl)cyclohexane; 1,1-bis(3,5-dimethyl-4-hydroxyphenyl)cyclohexane; 1,1-bis(3-chloro-4-hydroxy-5-methylphenyl)cyclohexane; 1,1-bis(3-bromo-4-hydroxy-5-methylphenyl)cyclohexane; 1,1-bis(3-chloro-4-hydroxy-5-isopropylphenyl)cyclohexane; 1,1-bis(3-bromo-4-hydroxy-5-isopropylphenyl)cyclohexane; 1,1-bis(3-t-butyl-5-chloro-4-hydroxyphenyl)cyclohexane; 1,1-bis(3-bromo-5-t-butyl-4-hydroxyphenyl)cyclohexane; 1,1-bis(3-chloro-5-phenyl-4-hydroxyphenyl)cyclohexane; 1,1-bis(3-bromo-5-phenyl-4-hydroxyphenyl)cyclohexane; 1,1-bis(3,5-disopropyl-4-hydroxyphenyl)cyclohexane; 1,1-bis(3,5-di-t-butyl-4-hydroxyphenyl)cyclohexane; 1,1-bis(3,5-diphenyl-4-hydroxyphenyl)cyclohexane; 1,1-bis(4-hydroxy-2,3,5,6-tetrachlorophenyl)cyclohexane; 1,1-bis(4-hydroxy-2,3,5,6-tetrabromophenyl)cyclohexane; 1,1-bis(4-hydroxy-2,3,5,6-tetramethylphenyl)cyclohexane; 1,1-bis(2,6-dichloro-3,5-dimethyl-4-hydroxyphenyl)cyclohexane; 1,1-bis(2,6-dibromo-3,5-dimethyl-4-hydroxyphenyl)cyclohexane; 1,1-bis(4-hydroxyphenyl)-3,3,5-trimethylcyclohexane; 1,1-bis(3-chloro-4-hydroxyphenyl)-3,3,5-trimethylcyclohexane; 1,1-bis(3-bromo-4-hydroxyphenyl)-3,3,5-trimethylcyclohexane; 1,1-bis(4-hydroxy-3-methylphenyl)-3,3,5-trimethylcyclohexane; 1,1-bis(4-hydroxy-3-isopropylphenyl)-3,3,5-trimethylcyclohexane; 1,1-bis(3-t-butyl-4-hydroxyphenyl)-3,3,5-trimethylcyclohexane; 1,1-bis(3-phenyl-4-hydroxyphenyl)-3,3,5-trimethylcyclohexane; 1,1-bis(3,5-dichloro-4-hydroxyphenyl)-3,3,5-trimethylcyclohexane; 1,1-bis(3,5-dibromo-4-hydroxyphenyl)-3,3,5-trimethylcyclohexane; 1,1-bis(3,5-dimethyl-4-hydroxyphenyl)-3,3,5-trimethylcyclohexane; 1,1-bis(3-chloro-4-hydroxy-5-methylphenyl)-3,3,5-trimethylcyclohexane; 1,1-bis(3-bromo-4-hydroxy-5-methylphenyl)-3,3,5-trimethylcyclohexane; 1,1-bis(3-chloro-4-hydroxy-5-isopropylphenyl)-3,3,5-trimethylcyclohexane; 1,1-bis(3-bromo-4-hydroxy-5-isopropylphenyl)-3,3,5-trimethylcyclohexane; 1,1-bis(3-t-butyl-5-chloro-4-hydroxyphenyl)-3,3,5-trimethylcyclohexane; 1,1-bis(3-bromo-5-t-butyl-4-hydroxyphenyl)-3,3,5-trimethylcyclohexane; bis(3-chloro-5-phenyl-4-hydroxyphenyl)-3,3,5-trimethylcyclohexane; 1,1-bis(3-bromo-5-phenyl-4-hydroxyphenyl)-3,3,5-trimethylcyclohexane; 1,1-bis(3,5-disopropyl-4-hydroxyphenyl)-3,3,5-trimethylcyclohexane; 1,1-bis(3,5-di-t-butyl-4-hydroxyphenyl)-3,3,5-trimethylcyclohexane; 1,1-bis(3,5-diphenyl-4-hydroxyphenyl)-3,3,5-trimethylcyclohexane; 1,1-bis(4-hydroxy-2,3,5,6-tetrachlorophenyl)-3,3,5-trimethylcyclohexane; 1,1-bis(4-hydroxy-2,3,5,6-tetrabromophenyl)-3,3,5-trimethylcyclohexane; 1,1-bis(4-hydroxy-2,3,5,6-tetramethylphenyl)-3,3,5-trimethylcyclohexane; 1,1-bis(2,6-dichloro-3,5-dimethyl-4-hydroxyphenyl)-3,3,5-trimethylcyclohexane; 1,1-bis(2,6-dibromo-3,5-dimethyl-4-hydroxyphenyl)-3,3,5-trimethylcyclohexane; 4,4'-dihydroxy-1,1-biphenyl; 4,4'-dihydroxy-3,3'-dimethyl-1,1-biphenyl; 4,4'-dihydroxy-3,3'-dioctyl-1,1-biphenyl; 4,4'-dihydroxydiphenylether; 4,4'-dihydroxydiphenylthioether; 1,3-bis(2-(4-hydroxyphenyl)-2-propyl)benzene; 1,3-bis(2-(4-hydroxy-3-methylphenyl)-2-propyl)benzene; 1,4-bis(2-(4-hydroxyphenyl)-2-propyl)benzene; and 1,4-bis(2-(4-hydroxy-3-methylphenyl)-2-propyl)benzene.

In an embodiment, the one or more dihydroxy precursor compounds comprise one or more dihydroxy benzenes including, but are not limited to: hydroquinone; resorcinol; methylhydroquinone; butylhydroquinone; phenylhydroquinone; 4-phenylresorcinol; and 4-methylresorcinol.

In an embodiment, the one or more dihydroxy precursor compounds comprise one or more dihydroxy naphthalenes including, but are not limited to: 1,4-dihydroxy naphthalene; 1,4-dihydroxy-2-methyl naphthalene; 1,4-dihydroxy-2-phenyl naphthalene; 1,3-dihydroxy naphthalene; 2,6-dihydroxy naphthalene; 2,6-dihydroxy-3-methyl naphthalene; and 2,6-dihydroxy-3-phenyl naphthalene.

The relative amounts of the one or more dihydroxy precursor compounds (e.g., bisphenol A) and other comonomers can be selected based on the desired composition of the polycarbonate.

### TRANSESTERIFICATION CATALYST

A catalyst system used for reaction between the one or more polycarbonate precursor compounds and the one or more dihydroxy precursor compounds can include a base, optionally at least one source of alkaline earth ions or alkali metal ions, and optionally at least one of a quaternary ammonium compound and a quaternary phosphonium compound or a mixture thereof. In an embodiment, the source of alkaline earth ions or alkali metal ions is in an amount such that the amount of alkaline earth or alkali metal ions present in the reaction mixture is in a range between 10⁻⁵ and 10⁻⁸ moles alkaline earth or alkali metal ion per mole of the dihydroxy precursor.

In an embodiment, the catalyst system comprises a quaternary ammonium compound. In an embodiment, the quaternary ammonium compound comprises an organic ammonium compounds having the structure, 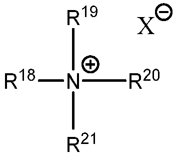 wherein R¹⁸, R¹⁹, R²⁰, and R²¹ can be independently selected from a C₁-C₂₀ alkyl radical, a C₄-C₂₀ cycloalkyl radical, or a C₄-C₂₀ aryl radical; and X⁻ is an organic or inorganic anion. In an embodiment, the anion X⁻ can be an anion selected from the group consisting of hydroxide, halide, carboxylate, sulfonate, sulfate, formate, carbonate, and bicarbonate.

In an embodiment, the catalyst system comprises an organic quaternary ammonium compounds including, but not limited to one or more of: tetramethyl ammonium hydroxide; tetrabutyl ammonium hydroxide; tetramethyl ammonium acetate; tetramethyl ammonium formate; and tetrabutyl ammonium acetate. In an embodiment, the catalyst comprises tetramethyl ammonium hydroxide.

In an embodiment, the catalyst system comprises a quaternary phosphonium compound. In an embodiment, the quaternary phosphonium compound comprises an organic phosphonium compounds having the structure, 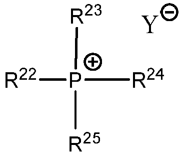 wherein R²², R²³, R²⁴, and R²⁵ can be independently selected from a C₁-C₂₀ alkyl radical, a C₄-C₂₀ cycloalkyl radical, or a C₄-C₂₀ aryl radical; and Y⁻ is an organic or inorganic anion. In an embodiment, the anion Y⁻ can be an anion selected from the group consisting of hydroxide, halide, carboxylate, sulfonate, sulfate, formate, carbonate, and bicarbonate.

In an embodiment, the catalyst system comprises an organic quaternary phosphonium including, but not limited to, one or more of: tetramethyl phosphonium hydroxide; tetramethyl phosphonium acetate; tetramethyl phosphonium formate; tetrabutyl phosphonium hydroxide; and tetrabutyl phosphonium acetate (TBPA). In an embodiment, the catalyst comprises tetrabutyl phosphonium acetate.

Where the anion (e.g., X⁻ or Y⁻) is a polyvalent anion, such as a carbonate or sulfate, it is to be understood that the positive and negative charges in the quaternary ammonium and phosphonium structures are properly balanced. For example, where R¹⁸-R²¹ are each methyl groups and X⁻ or Y⁻ is carbonate, it is understood that X⁻ or Y⁻ represents 1/2 (CO₃²).

Alkaline earth ions that can be used as the X⁻ or Y⁻ anions can include, but are not limited to, alkaline earth hydroxides, such as magnesium hydroxide and calcium hydroxide. Alkali metal ions that can be used as the X⁻ or Y⁻ anions can include, but are not limited to, alkali metal hydroxides, such as lithium hydroxide, sodium hydroxide, and potassium hydroxide. Other sources of alkaline earth and alkali metal ions can include salts of carboxylic acids, such as sodium acetate and derivatives of ethylene diamine tetraacetic acid (EDTA) such as EDTA tetrasodium salt, and EDTA magnesium disodium salt. In an embodiment, the anions are from sodium hydroxide. Further sodium hydroxide can be contained within the reaction components as an impurity and can be contained in such an amount as to catalyze the reaction without the addition of additional catalysts.

In an embodiment, an effective amount of catalyst is employed. The amount of catalyst employed can be based upon the total number of moles of the one or more dihydroxy precursor compounds employed in the polymerization reaction. When referring to the ratio of catalyst, for example phosphonium salt, to all dihydroxy precursory compounds employed in the polymerization reaction, it can be convenient to refer to moles of phosphonium salt per mole of the one or more dihydroxy precursor compounds, meaning the number of moles of phosphonium salt divided by the sum of the moles of each individual dihydroxy precursor compound present in the reaction mixture. The amount of organic ammonium or phosphonium salts employed can be in a range from about 1x10⁻² to about 1x10⁻⁵ moles per mole of the one or more dihydroxy precursor compounds, such as from about 1x10⁻³ to about 1x10⁻⁴ moles per mole of the one or more dihydroxy precursor compounds. In an embodiment, an inorganic metal hydroxide catalyst can be used in an amount corresponding to from about 1x10⁻⁴ to about 1x10⁻⁸ moles of metal hydroxide per mole of the one or more dihydroxy precursor compounds, such as from about 1x10⁻⁴ to about 1x10⁻⁷ moles of metal hydroxide per mole of the dihydroxy precursor compounds.

In an embodiment, the catalyst system includes solely an alkali metal hydroxide. In an embodiment, the alkali metal hydroxides includes, but is not limited to, one or more of: sodium hydroxide, lithium hydroxide, and potassium hydroxide. Due to its relatively low cost, sodium hydroxide is often preferred.

### SOLVENTS

The reaction components can include the one or more polycarbonate precursors, one or more activated carbonate residues, and one or more transesterification catalyst. The activated carbonate residue will also herein be referred to as a solvent. The one or more solvents can include an activated carbonate residue or a mixture of activated carbonate residues and other solvents. The one or more solvents present in the solution can include from about 1 percent by weight to about 99 percent by weight, such as from about 1 percent by weight to about 70 percent by weight, of the solution. For example, a solution of a bisphenol A polycarbonate dissolved in methyl salicylate can be about 40 percent by weight of the polycarbonate and about 60 percent by weight of the methyl salicylate solvent.

In an embodiment, the solution can include more than one solvent. For example, a solution of a bisphenol A polycarbonate dissolved in a mixture of ortho-dichlorobenzene (ODCB) and methyl salicylate, wherein the solution can be about 40 percent by weight polycarbonate, about 30 percent by weight ODCB, and about 30 percent by weight methyl salicylate.

In one embodiment, the one or more solvents employed can comprise at least one ester-substituted phenol having the structure, 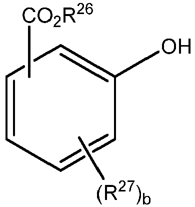 wherein R²⁶ can be a C₁-C₂₀ alkyl group, a C₄-C₂₀ cycloalkyl group, or a C₄-C₂₀ aryl group; each occurrence of R²⁷ can be independently selected from a halogen atom, a cyano group, a nitro group, a C₁-C₂₀ alkyl group, a C₄-C₂₀ cycloalkyl group, a C₄-C₂₀ aryl group, a C₁-C₂₀ alkoxy group, a C₄-C₂₀ cycloalkoxy group, a C₄-C₂₀ aryloxy group, a C₁-C₂₀ alkylthio group, a C₄-C₂₀ cycloalkylthio group, a C₄-C₂₀ arylthio group, a C₁-C₂₀ alkylsulfinyl group, a C₄-C₂₀ cycloalkylsulfinyl group, a C₄-C₂₀ arylsulfinyl group, a C₁-C₂₀ alkylsulfonyl group, a C₄-C₂₀ cycloalkylsulfonyl group, a C₄-C₂₀ arylsulfonyl group, a C₁-C₂₀ alkoxycarbonyl group, a C₄-C₂₀ cycloalkoxycarbonyl group, a C₄-C₂₀ aryloxycarbonyl group, a C₂-C₆₀ alkylamino group, a C₆-C₆₀ cycloalkylamino group, a C₅-C₆₀ arylamino group, a C₁-C₄₀ alkylaminocarbonyl group, a C₄-C₄₀ cycloalkylaminocarbonyl group, a C₄-C₄₀ arylaminocarbonyl group, or a C₁-C₂₀ acylamino group; and b is an integer from 0-4.

In an embodiment, the one or more solvents comprise an ester-substituted phenol including, but are not limited to, one or more of: methyl salicylate; ethyl salicylate; propyl salicylate; butyl salicylate; 4-chloro methyl salicylate; benzyl salicylate; and mixtures thereof. In an embodiment, the solvent comprises methyl salicylate.

In an embodiment, the one or more solvents can optionally include one or more of: a halogenated aliphatic solvent; a halogenated aromatic solvent; a non-halogenated aromatic solvent; a non-halogenated aliphatic solvent; or a mixture thereof. In an embodiment, the one or more solvents can include a halogenated aromatic solvents including, but are not limited to, one or more of ortho-dichlorobenzene (ODCB), chlorobenzene, and the like. In an embodiment, the one or more solvents can include a non-halogenated aromatic solvent including, but are not limited to, one or more of: toluene; xylene; anisole; phenol; and 2,6-dimethylphenol. In an embodiment, the one or more solvents can include a halogenated aliphatic solvent including, but are not limited to, one or more of: methylene chloride; chloroform; and 1,2-dichloroethane. In an embodiment, the one or more solvents can include a non-halogenated aliphatic solvent including, but are not limited to, one or more of: ethanol, acetone, ethyl acetate, and cyclohexanone. In an embodiment, the one or more solvents comprise a mixture of a halogenated aromatic solvent and an ester-substituted phenol, for example a mixture of ortho-dichlorobenzene (ODCB) and methyl salicylate.

The one or more solvents can be recovered and reused. In an embodiment, ester-substituted phenols such as methyl salicylate can be recovered, purified, and reacted with phosgene to make ester-substituted diaryl carbonates which in turn can be used to prepare the polycarbonate. In an example, purification of the recovered ester-substituted phenol is carried out by distillation.

## Claims

1. A system for fabricating a part, the system (10, 80) comprising:
one or more dispensers (48, 50, 110, 112) each comprising a reservoir, wherein each reservoir comprises a polycarbonate precursor solution comprising a polycarbonate precursor compound;
print heads (18, 20, 88, 90) configured to selectively print one or more droplets (34, 36, 94, 98) formed of one or more polycarbonate precursor solutions onto each of one or more target locations (26, 96) on a substrate (16, 84) within a build area to form one or more reactive mixture droplets (44, 100) at each of the one or more target locations (26, 96); and
an environmental system configured to expose the reactive mixture droplets (44, 100) to at least one of a selected pressure and a selected temperature to polymerize one or more polycarbonate precursor compounds to form a polycarbonate, wherein each of the selected pressure and the selected temperature are different than a respective ambient pressure and ambient temperature,
wherein the polycarbonate precursor compound comprises one or more carbonate compounds that are reactive toward transesterification reaction and one or more dihydroxy compounds, and
wherein the print heads (18, 20, 88, 90) comprise,
a first print head (18, 88) configured to selectively print one or more first droplets (34, 94) of a first solution comprising one or more carbonate compounds that are reactive toward transesterification reaction onto each of one or more target locations (26, 96) on a substrate (16, 84) within the build area; and
a second print head (20, 90) configured to selectively print one or more second droplets (36, 98) of a second solution comprising one or more dihydroxy compounds onto each of one or more target locations (26, 96) on the substrate (16, 84) so that one or more first droplets (34, 94) of the first solution and one or more second droplets (36, 98) of the second solution combine to form a reactive mixture droplet (44, 100) at each of the target locations (26, 96).

2. The system of claim 1, wherein the one or more carbonate compounds comprises bismethylsalicylcarbonate (BMSC).

3. The system of any one of claims 1-2, wherein the one or more dihydroxy compounds comprises bisphenol A.

4. The system of any one of claims 1-3, further comprising a control system configured to selectively aim the print heads (18, 20, 88, 90) toward the each of the one or more target locations (26, 96); and
preferably wherein the control system is configured to:
aim a first print head (18, 88) to print a first one or more first droplets (34, 94) of a first solution comprising one or more carbonate compounds that are reactive toward transesterification reaction at a first of the target locations (26, 96);
aim a second print head (20, 90) to print a first one or more second droplets (36, 98) of a second solution comprising one or more dihydroxy compounds at the first of the target locations (26, 96) so that the first one or more first droplets (34, 94) and the first one or more second droplets (36, 98) combine at the first of the target location (26, 96) to form a first reaction mixture droplet (44, 100);
aim the first print head (18, 88) to print a second one or more first droplets (34, 94) of the first solution at a second of the target locations (26, 96); and
aim the second print head (20, 90) to print a second one or more second droplets (36, 98) of the second solution at the second of the target locations (26, 96) so that the second one or more first droplets (34, 94) and the second one or more second droplets (36, 98) combine at the second of the target locations (26, 96) to form a second reaction mixture droplet (44, 100).

5. The system of any one of claims 1-4, wherein the environmental system comprises a temperature controller and at least one heating device configured to expose the reactive mixture droplets (44, 100) to a temperature from about 100 °C to about 400 °C.

6. The system of claim 5, wherein the heating device comprises a heater (60, 116) configured to locally heat a portion of the reactive mixture droplets (44,100).

7. The system of any one of claims 1-6, wherein the environmental system comprises a vacuum system (68, 118) to apply a vacuum pressure to the build area.

8. The system of any one of claims 1-7, wherein at least one of the one or more polycarbonate precursor solutions comprise a catalyst for the polymerization of the one or more polycarbonate precursor compounds.

9. A method for fabricating a part, the method comprising:
printing one or more droplets (34, 36, 94, 98) of one or more polycarbonate precursor solutions comprising one or more polycarbonate precursor compounds onto each of one or more target locations (26, 96) on a substrate (16, 84) within a build area to form a reactive mixture droplet (44, 100) at each of the one or more target locations (26, 96); and
exposing the reactive mixture droplets (44, 100) to reaction conditions to polymerize the one or more polycarbonate precursor compounds to form a polycarbonate,
wherein the one or more polycarbonate precursor compounds comprise one or more carbonate compounds that are reactive toward transesterification reaction and one or more dihydroxy compounds, and
wherein printing the one or more droplets (34, 36, 94, 98) of the one or more polycarbonate precursor solutions comprises,
printing one or more first droplets (34, 94) of a first solution comprising one or more carbonate compounds that are reactive toward transesterification reaction onto each of one or more target locations (26, 96) on a substrate (16, 84) within a build area;
printing one or more second droplets (36, 98) of a second solution comprising one or more dihydroxy compounds onto each of the target locations (26, 96) on the substrate (16, 84), such that one or more first droplets (34, 94) of the first solution and one or more second droplets (36, 98) of the second solution are combined to form the reactive mixture droplet (44, 100) at each of the target locations (26, 96).

10. The method of claim 9, wherein the one or more dihydroxy compounds comprises bisphenol A.

11. The method of any one of claims 9-10, wherein the one or more carbonate compounds comprises bismethylsalicylcarbonate.

12. The method of any one of claims 9-11, wherein the one or more polycarbonate precursor solutions comprises a catalyst.

13. The method of any one of claims 9-12, wherein exposing the reactive mixture droplets (44, 100) to reaction conditions comprises exposing the reactive mixture droplets (44, 100) to a temperature from about 100 °C to about 400 °C.

14. The method of any one of claims 9-13, wherein the polymerization of the one or more polycarbonate precursor compounds forms a carbonate residue byproduct, the method further comprising removing the carbonate residue byproduct from the build area.

15. The method of any one of claims 9-14, wherein printing the one or more droplets (34, 36, 94, 98) of the one or more polycarbonate precursor solutions comprises:
selectively printing one or more first droplets (34, 94) of a first solution comprising one or more carbonate compounds that are reactive toward transesterification reaction onto a first target location (26, 96);
printing one or more first droplets (36, 98) of a second solution comprising one or more dihydroxy compounds onto the first target location (26, 96) so that the one or more first droplets (34, 94) of the first solution and the one or more first droplets (36, 98) of the second solution combine at the first target location (26, 96) to form a first reaction mixture droplet (44, 100);
printing one or more second droplets (34, 94) of the first solution onto a second target location (26, 96); and
printing one or more second droplets (36, 98) of the second solution onto the second target location (26, 96) so that the one or more second droplets (34, 94) of the first solution and the one or more second droplets (36, 98) of the second solution combine at the second target location (26, 96) to form a second reaction mixture droplet (44, 100).

## Patentansprüche

1. System zur Herstellung eines Teils, wobei das System (10, 80) umfasst:
einen oder mehrere Abgabevorrichtungen (48, 50, 110, 112), die jeweils einen Behälter umfassen, wobei jeder Behälter eine Polycarbonatvorläuferlösung umfasst, die eine Polycarbonatvorläuferverbindung umfasst;
Druckköpfe (18, 20, 88, 90), die konfiguriert sind, um selektiv ein oder mehrere Tröpfchen (34, 36, 94, 98), die aus einer oder mehreren Polycarbonatvorläuferlösungen gebildet sind, auf jede von einer oder mehreren Zielstellen (26, 96) auf einem Substrat (16, 84) innerhalb eines Baubereichs zu drucken, um ein oder mehrere reaktive Gemischtröpfchen (44, 100) an jeder der einen oder der mehreren Zielstellen (26, 96) zu bilden; und
eine Klimaregelungsanlage, die konfiguriert ist, um die reaktiven Gemischtröpfchen (44, 100) mindestens einem von einem ausgewählten Druck und einer ausgewählten Temperatur auszusetzen, um eine oder mehrere Polycarbonatvorläuferverbindungen zu polymerisieren, um ein Polycarbonat zu bilden, wobei jeder des ausgewählten Drucks und der ausgewählten Temperatur sich von einem jeweiligen Umgebungsdruck und einer Umgebungstemperatur unterscheiden,
wobei die Polycarbonatvorläuferverbindung eine oder mehrere Carbonatverbindungen, die gegenüber der Umesterungsreaktion reaktiv sind, und eine oder mehrere Dihydroxyverbindungen umfasst, und
wobei die Druckköpfe (18, 20, 88, 90) Folgendes umfassen,
einen ersten Druckkopf (18, 88), der konfiguriert ist, um selektiv ein oder mehrere erste Tröpfchen (34, 94) einer ersten Lösung zu drucken, die eine oder mehrere Carbonatverbindungen umfasst, die gegenüber einer Umesterungsreaktion auf jede von einer oder mehreren Zielstellen (26, 96) auf einem Substrat (16, 84) innerhalb des Baubereichs reagieren; und
einen zweiten Druckkopf (20, 90), der konfiguriert ist, um selektiv ein oder mehrere zweite Tröpfchen (36, 98) einer zweiten Lösung, die eine oder mehrere Dihydroxyverbindungen umfasst, auf jede von einer oder mehreren Zielstellen (26, 96) auf dem Substrat (16, 84) zu drucken, sodass sich eines oder mehrere erste Tröpfchen (34, 94) der ersten Lösung und eines oder mehrere zweite Tröpfchen (36, 98) der zweiten Lösung verbinden, um ein reaktives Gemischtröpfchen (44, 100) an jeder der Zielstellen (26, 96) zu bilden.

2. System nach Anspruch 1, wobei die eine oder die mehreren Carbonatverbindungen Bismethylsalicylcarbonat (BMSC) umfassen.

3. System nach einem der Ansprüche 1-2, wobei die eine oder die mehreren Dihydroxyverbindungen Bisphenol A umfassen.

4. System nach einem der Ansprüche 1-3, ferner umfassend ein Steuersystem, das konfiguriert ist, um die Druckköpfe (18, 20, 88, 90) selektiv auf jeden der einen oder der mehreren Zielstellen (26, 96) auszurichten; und
vorzugsweise, wobei das Steuersystem zu Folgendem konfiguriert ist:
Ausrichten eines ersten Druckkopfs (18, 88), um eine erstes eines oder mehrere erste Tröpfchen (34, 94) einer ersten Lösung zu drucken, die eine oder mehrere Carbonatverbindungen umfasst, die gegenüber einer Umesterungsreaktion an einer ersten der Zielstellen (26, 96) reaktiv sind;
Ausrichten eines zweiten Druckkopfs (20, 90), um ein erstes eines oder mehrere zweite Tröpfchen (36, 98) einer zweiten Lösung zu drucken, die eine oder mehrere Dihydroxyverbindungen an der ersten der Zielstellen (26, 96) umfasst, sodass sich das erste eine oder die mehreren ersten Tröpfchen (34, 94) und das erste eine oder die mehreren zweiten Tröpfchen (36, 98) an der ersten der Zielstelle (26, 96) verbinden, um ein erstes Reaktionsgemischtröpfchen (44, 100) zu bilden;
Ausrichten des ersten Druckkopfs (18, 88), um ein zweites eines oder mehrere erste Tröpfchen (34, 94) der ersten Lösung auf eine zweite der Zielstellen (26, 96) zu drucken; und
Ausrichten des zweiten Druckkopfs (20, 90), um ein erstes eines oder mehrere zweite Tröpfchen (36, 98) der zweiten Lösung an der zweiten der Zielstellen (26, 96) zu drucken, sodass sich das zweite eine oder die mehreren ersten Tröpfchen (34, 94) und das zweite eine oder die mehreren zweiten Tröpfchen (36, 98) an der zweiten der Zielstellen (26, 96) verbinden, um ein zweites Reaktionsgemischtröpfchen (44, 100) zu bilden.

5. System nach einem der Ansprüche 1-4, wobei die Klimaregelungsanlage einen Temperaturregler und mindestens eine Heizvorrichtung umfasst, die konfiguriert ist, um die reaktiven Gemischtröpfchen (44, 100) einer Temperatur von etwa 100 °C bis etwa 400 °C auszusetzen.

6. System nach Anspruch 5, wobei die Heizvorrichtung eine Heizung (60, 116) umfasst, die konfiguriert ist, um einen Abschnitt der reaktiven Gemischtröpfchen (44, 100) lokal zu erwärmen.

7. System nach einem der Ansprüche 1-6, wobei die Klimaregelungsanlage ein Vakuumsystem (68, 118) umfasst, um einen Vakuumdruck auf den Baubereich auszuüben.

8. System nach einem der Ansprüche 1-7, wobei mindestens eine der einen oder der mehreren Polycarbonatvorläuferlösungen einen Katalysator für die Polymerisation der einen oder der mehreren Polycarbonatvorläuferverbindungen umfasst.

9. Verfahren zum Herstellen eines Teils, wobei das Verfahren Folgendes umfasst:
Drucken eines oder mehrerer Tröpfchen (34, 36, 94, 98) einer oder mehrerer Polycarbonatvorläuferlösungen, die eine oder mehrere Polycarbonatvorläuferverbindungen umfassen, auf jede von einer oder mehrerer Zielstellen (26, 96) und ein Substrat (16, 84) innerhalb eines Baubereichs, um ein reaktives Gemischtröpfchen (44, 100) an jeder der einen oder der mehreren Zielstellen (26, 96) zu bilden; und
Aussetzen der reaktiven Gemischtröpfchen (44, 100) den Reaktionsbedingungen, um die eine oder die mehreren Polycarbonatvorläuferverbindungen unter Bildung eines Polycarbonats zu polymerisieren,
wobei die eine oder die mehreren Polycarbonatvorläuferverbindungen eine oder mehrere Carbonatverbindungen, die gegenüber der Umesterungsreaktion reaktiv sind, und eine oder mehrere Dihydroxyverbindungen umfassen, und
wobei das Drucken der einen oder der mehreren Tröpfchen (34, 36, 94, 98) der einen oder der mehreren Polycarbonatvorläuferlösungen umfasst,
Drucken eines oder mehrerer erster Tröpfchen (34, 94) einer ersten Lösung, die eine oder mehrere Carbonatverbindungen umfasst, die gegenüber einer Umesterungsreaktion auf jede von einer oder mehreren Zielstellen (26, 96) auf einem Substrat (16, 84) innerhalb eines Baubereichs reagieren;
Drucken eines oder mehrerer zweiter Tröpfchen (36, 98) einer zweiten Lösung, die eine oder mehrere Dihydroxyverbindungen umfasst, auf jede der Zielstellen (26, 96) auf dem Substrat (16, 84) zu drucken, sodass eines oder mehrere erste Tröpfchen (34, 94) der ersten Lösung und eines oder mehrere zweite Tröpfchen (36, 98) der zweiten Lösung verbunden werden, um das reaktive Gemischtröpfchen (44, 100) an jeder der Zielstellen (26, 96) zu bilden.

10. Verfahren nach Anspruch 9, wobei die eine oder die mehreren Dihydroxyverbindungen Bisphenol A umfassen.

11. Verfahren nach einem der Ansprüche 9-10, wobei die eine oder die mehreren Carbonatverbindungen Bismethylsalicylcarbonat umfassen.

12. Verfahren nach einem der Ansprüche 9-11, wobei die eine oder die mehreren Polycarbonatvorläuferlösungen einen Katalysator umfassen.

13. Verfahren nach einem der Ansprüche 9-12, wobei das Aussetzen der reaktiven Gemischtröpfchen (44, 100) Reaktionsbedingungen das Aussetzen der reaktiven Gemischtröpfchen (44, 100) einer Temperatur von etwa 100 °C bis etwa 400 °C umfasst.

14. Verfahren nach einem der Ansprüche 9-13, wobei die Polymerisation der einen oder der mehreren Polycarbonatvorläuferverbindungen ein Carbonatrest-Nebenprodukt bildet, wobei das Verfahren ferner das Entfernen des Carbonatrest-Nebenprodukts aus dem Baubereich umfasst.

15. Verfahren nach einem der Ansprüche 9-14, wobei das Drucken der einen oder der mehreren Tröpfchen (34, 36, 94, 98) der einen oder der mehreren Polycarbonatvorläuferlösungen Folgendes umfasst:
Selektives Drucken des ersten einen oder mehrerer erster Tröpfchen (34, 94) einer ersten Lösung, die eine oder mehrere Carbonatverbindungen umfasst, die gegenüber einer Umesterungsreaktion an einer ersten Zielstelle (26, 96) reaktiv sind;
Drucken eines oder mehrerer erster Tröpfchen (36, 98) einer zweiten Lösung, die eine oder mehrere Dihydroxyverbindungen umfasst, auf die erste Zielstelle (26, 96), sodass sich das eine oder die mehreren ersten Tröpfchen (34, 94) der ersten Lösung und das eine oder die mehreren ersten Tröpfchen (36, 98) der zweiten Lösung an der ersten Zielstelle (26, 96) verbinden, um ein erstes Reaktionsgemischtröpfchen (44, 100) zu bilden;
Drucken eines oder mehrerer zweiter Tröpfchen (34, 94) der ersten Lösung auf eine zweite Zielstelle (26, 96); und
Drucken eines oder mehrerer zweiter Tröpfchen (36, 98) der zweiten Lösung auf die zweite Zielstelle (26, 96), sodass sich das eine oder die mehreren zweiten Tröpfchen (34, 94) der ersten Lösung und das eine oder die mehreren zweiten Tröpfchen (36, 98) der zweiten Lösung an der zweiten Zielstelle (26, 96) verbinden, um ein zweites Reaktionsgemischtröpfchen (44, 100) zu bilden.

## Revendications

1. Système pour fabriquer une pièce, le système (10, 80) comprenant :
un ou plusieurs distributeurs (48, 50, 110, 112) comprenant chacun un réservoir, chaque réservoir comprend une solution d'un précurseur de polycarbonate comprenant un composé précurseur de polycarbonate ;
des têtes d'impression (18, 20, 88, 90) configurées pour imprimer sélectivement une ou plusieurs gouttelettes (34, 36, 94, 98) formées à partir d'une ou plusieurs solutions de précurseur de polycarbonate sur chacun d'un ou plusieurs emplacements cibles (26, 96) sur un substrat (16, 84) dans une zone de construction en vue de former une ou plusieurs gouttelettes de mélange réactif (44, 100) à chacun du ou des emplacements cibles (26, 96) ; et
un système environnemental configuré pour exposer les gouttelettes de mélange réactif (44, 100) à au moins l'une parmi une pression sélectionnée et une température sélectionnée pour polymériser un ou plusieurs composés précurseurs de polycarbonate pour former un polycarbonate, chacune de la pression sélectionnée et de la température sélectionnée étant différente d'une pression ambiante et d'une température ambiante respectivement,
le composé précurseur de polycarbonate comprenant un ou plusieurs composés carbonates qui sont réactifs à la réaction de transestérification et un ou plusieurs composés di-hydroxyles, et
les têtes d'impression (18, 20, 88, 90) comprenant
une première tête d'impression (18, 88) configurée pour imprimer sélectivement une ou plusieurs premières gouttelettes (34, 94) d'une première solution comprenant un ou plusieurs composés carbonates réactifs à la réaction de transestérification sur chacun du ou des emplacements cibles (26, 96) sur un substrat (16, 84) à l'intérieur de la zone de construction ; et
une seconde tête d'impression (20, 90) configurée pour imprimer sélectivement une ou plusieurs secondes gouttelettes (36, 98) d'une seconde solution comprenant un ou plusieurs composés di-hydroxyles sur chacun du ou des emplacements cibles (26, 96) sur le substrat (16, 84) de sorte qu'une ou plusieurs premières gouttelettes (34, 94) de la première solution et une ou plusieurs secondes gouttelettes (36, 98) de la seconde solution se combinent pour former une gouttelette de mélange réactif (44, 100) à chacun des emplacements cibles (26, 96).

2. Système selon la revendication 1, dans lequel le ou les composés carbonates comprennent du bisméthylsalicylcarbonate (BMSC).

3. Système selon l'une quelconque des revendications 1-2, dans lequel le ou les composés di-hydroxyles comprennent le bisphénol A.

4. Système selon l'une quelconque des revendications 1-3, comprenant en outre un système de contrôle configuré pour orienter sélectivement les têtes d'impression (18, 20, 88, 90) vers chacun du ou des emplacements cibles (26, 96) ; et
dans lequel de préférence le système de contrôle est configuré pour :
orienter une première tête d'impression (18, 88) pour imprimer à un premier des emplacements cibles (26, 96) une ou plusieurs premières premières gouttelettes (34, 94) d'une première solution comprenant un ou plusieurs composés carbonates réactifs à la réaction de transestérification ;
orienter une seconde tête d'impression (20, 90) pour imprimer au premier des emplacements cibles (26, 96) une ou plusieurs premières secondes gouttelettes (36, 98) d'une seconde solution comprenant un ou plusieurs composés di-hydroxyles de sorte que la ou les premières premières gouttelettes (34, 94) et la ou les premières secondes gouttelettes (36, 98) se combinent au premier des emplacements cibles (26, 96) pour former une première gouttelette de mélange réactif (44, 100) ;
orienter la première tête d'impression (18, 88) pour imprimer à un deuxième des emplacements cibles (26, 96) une ou plusieurs deuxièmes premières gouttelettes (34, 94) de la première solution ; et
orienter la seconde tête d'impression (20, 90) pour imprimer au deuxième des emplacements cibles (26, 96) une ou plusieurs deuxièmes secondes gouttelettes (36, 98) de la seconde solution de sorte que la ou les deuxièmes premières gouttelettes (34, 94) et la ou les deuxièmes secondes gouttelettes (36, 98) se combinent au deuxième des emplacements cibles (26, 96) pour former une deuxième gouttelette de mélange réactif (44, 100).

5. Système selon l'une quelconque des revendications 1-4, dans lequel le système environnemental comprend un régulateur de température et au moins un dispositif de chauffage configuré pour exposer les gouttelettes de mélange réactif (44, 100) à une température comprise entre environ 100 °C et environ 400 °C.

6. Système selon la revendication 5, dans lequel le dispositif de chauffage comprend un élément chauffant (60, 116) configuré pour chauffer localement une partie des gouttelettes de mélange réactif (44, 100).

7. Système selon l'une quelconque des revendications 1-6, dans lequel le système environnemental comprend un système de vide (68, 118) pour appliquer une pression de vide à la zone de construction.

8. Système selon l'une quelconque des revendications 1-7, dans lequel au moins l'une parmi la ou les solutions de précurseurs de polycarbonate comprend un catalyseur pour la polymérisation du ou des composés précurseurs de polycarbonate.

9. Procédé de fabrication d'une pièce, le procédé comprenant les étapes consistant à :
imprimer une ou plusieurs gouttelettes (34, 36, 94, 98) d'une ou plusieurs solutions de précurseurs de polycarbonate comprenant un ou plusieurs composés précurseurs de polycarbonate sur chacun d'un ou plusieurs emplacements cibles (26, 96) sur un substrat (16, 84) dans une zone de construction en vue de former une gouttelette de mélange réactif (44, 100) à chacun du ou des endroits cibles (26, 96) ; et
exposer les gouttelettes de mélange réactif (44, 100) à des conditions de réaction pour polymériser le ou les composés précurseurs de polycarbonate pour former un polycarbonate,
le ou les composés précurseurs de polycarbonate comprenant un ou plusieurs composés carbonates réactifs à la réaction de transestérification et un ou plusieurs composés di-hydroxyles, et
l'impression de la ou des gouttelettes (34, 36, 94, 98) de la ou des solutions précurseurs de polycarbonate comprend
l'impression d'une ou plusieurs premières gouttelettes (34, 94) d'une première solution comprenant un ou plusieurs composés carbonates réactifs à la réaction de transestérification sur chacun d'un ou plusieurs emplacements cibles (26, 96) sur un substrat (16, 84) dans une zone de construction ;
l'impression d'une ou plusieurs secondes gouttelettes (36, 98) d'une seconde solution comprenant un ou plusieurs composés di-hydroxyles sur chacun des emplacements cibles (26, 96) sur le substrat (16, 84), de sorte qu'une ou plusieurs premières gouttelettes (34, 94) de la première solution et une ou plusieurs secondes gouttelettes (36, 98) de la seconde solution se combinent pour former la gouttelette de mélange réactif (44, 100) à chacun des emplacements cibles (26, 96).

10. Procédé selon la revendication 9, dans lequel le ou les composés di-hydroxyles comprennent du bisphénol A.

11. Procédé selon l'une quelconque des revendications 9-10, dans lequel le ou les composés carbonates comprennent du bisméthylsalicylcarbonate.

12. Procédé selon l'une quelconque des revendications 9-11, dans lequel la ou les solutions de précurseurs de polycarbonate comprennent un catalyseur.

13. Procédé selon l'une quelconque des revendications 9-12, dans lequel l'exposition des gouttelettes de mélange réactif (44, 100) à des conditions de réaction comprend l'exposition des gouttelettes de mélange réactif (44, 100) à une température comprise entre environ 100 °C et environ 400 °C.

14. Procédé selon l'une quelconque des revendications 9-13, dans lequel la polymérisation du ou des composés précurseurs de polycarbonate forme un sous-produit de résidu de carbonate, le procédé comprenant en outre l'élimination du sous-produit de résidu de carbonate de la zone de construction.

15. Procédé selon l'une quelconque des revendications 9-14, dans lequel l'impression de la ou des gouttelettes (34, 36, 94, 98) de la ou des solutions précurseurs de polycarbonate comprend :
l'impression sélective sur un premier emplacement cible (26, 96) d'une ou plusieurs premières gouttelettes (34, 94) d'une première solution comprenant un ou plusieurs composés carbonates réactifs à la réaction de transestérification ;
l'impression sur le premier emplacement cible (26, 96) d'une ou plusieurs premières gouttelettes (36, 98) d'une seconde solution comprenant un ou plusieurs composés di-hydroxyles de sorte que la ou les premières gouttelettes (34, 94) de la première solution et la ou les premières gouttelettes (36, 98) de la seconde solution se combinent au premier emplacement cible (26, 96) pour former une première gouttelette de mélange réactif (44, 100) ;
imprimer une ou plusieurs deuxièmes gouttelettes (34, 94) de la première solution sur un deuxième emplacement cible (26, 96) ; et
imprimer une ou plusieurs deuxièmes gouttelettes (36, 98) de la seconde solution sur le deuxième emplacement cible (26, 96) de sorte que la ou les deuxièmes gouttelettes (34, 94) de la première solution et la ou les deuxièmes gouttelettes (36, 98) de la seconde solution se combinent au deuxième emplacement cible (26, 96) pour former une deuxième gouttelette de mélange réactionnel (44, 100).
